Europäisches Patentamt

European Patent Office

Office européen des brevets

(19)

(11) Veröffentlichungsnummer: **0 141 365 B1**

# EUROPÄISCHE PATENTSCHRIFT

(12)

(45) Veröffentlichungstag der Patentschrift:
11.03.87

(21) Anmeldenummer: **84112740.0**

(22) Anmeldetag: **23.10.84**

(51) Int. Cl.⁴: **C 03 B 37/014,** C 03 C 13/04

(54) **Verfahren zur Verringerung des Hydroxylanteils in Lichtwellenleitern.**

(30) Priorität: 25.10.83 DE 3338714

(43) Veröffentlichungstag der Anmeldung:
**15.05.85 Patentblatt 85/20**

(45) Bekanntmachung des Hinweises auf die Patenterteilung:
**11.03.87 Patentblatt 87/11**

(84) Benannte Vertragsstaaten:
**AT BE CH DE FR GB IT LI NL SE**

(56) Entgegenhaltungen:
**EP - A - 0 068 388
DE - A - 2 313 250**

(73) Patentinhaber: **Wacker-Chemitronic Gesellschaft für Elektronik-Grundstoffe mbH,
Johannes-Hess-Strasse 24, D-8263 Burghausen (DE)**

(72) Erfinder: **Staudigl, Rudolf, Dr. Dipl.-Chem., Unghauser Strasse 33, D-8263 Burghausen (DE)**

ACTORUM AG

**Beschreibung**

Die Erfindung betrifft ein Verfahren zur Verringerung des Hydroxylanteils in Lichtwellenleitern.

Eine wesentliche Ursache für Dämpfungsverluste in Lichtwellenleitern sind Absorptionen durch Schwingungsbanden von Hydroxylgruppen, welche im Bereich der technisch interessanten Wellenlängen bei 0,945 µm, 1,24 µm und 1,38 µm auftreten. Man ist daher bestrebt, den Hydroxylanteil in Lichtleitfasern möglichst gering zu halten oder die Absorptionsbanden durch Ersatz des Hydroxylwasserstoffs durch Deuterium in den längerwelligen Bereich zu verschieben.

So ist beispielsweise aus der US-A-42 82 196 bekannt, den Glasbildner Siliciumtetrachlorid vor der Umsetzung zu Quarzglas partiell durch Wasserzusatz zu hydrolysieren und in dem entstandenen Gel die vorhandenen Verunreinigungen zu absorbieren. Bei Verwendung von schwerem Wasser kann der nachteilige Effekt der aus dem Hydrolysewasser stammenden OH-Gruppen verringert werden; OH-Gruppen aus anderen Quellen werden durch diese Massnahme jedoch nicht berührt.

Aus der DE-A-23 13 250 ist bekannt, die Oxidation des Glasbildners in Gegenwart von Deuterium ($D_2$) oder Deuteriumverbindungen vorzunehmen, wodurch in das Glas anstelle von OH-Gruppen die entsprechenden OD-Gruppen eingebaut werden. Dieses Verfahren ist wegen der Verbrennung des teuren Deuteriums mit hohen Kosten verbunden und verhindert nur, dass beim Verbrennungsvorgang selbst OH-Gruppen entstehen und in das Glas eingebaut werden.

Eine wichtige Quelle für OH-Gruppen in Lichtwellenleitern bleibt durch die genannten Verfahren jedoch unberücksichtigt, nämlich die bei der Herstellung von Lichtleitfasermaterial eingesetzten inerten und oxidierenden Gase, welche auch nach sorgfältiger Trocknung stets einen zwar geringen, aber merklichen Restgehalt an Wasser aufweisen.

Solche Gase sind beispielsweise Helium, Neon, Argon, Stickstoff, Sauerstoff, Distickstoffmonoxid, Stickstoffmonoxid, Kohlendioxid, aber auch Freone, wie z.B. Difluordichlormethan, oder Halogene, wie Chlorgas. Diese Gase, die im Rahmen der Glasfaserherstellung hauptsächlich als Trägergase oder Oxidationsmittel zum Einsatz kommen, werden im folgenden der Einfachheit halber als Hilfsgase bezeichnet.

Aufgabe der Erfindung war es, ein Verfahren anzugeben, das den Wasseranteil in den Hilfsgasen als Quelle für OH-Gruppen in Lichtleitfasermaterial weitestgehend ausschaltet.

Gelöst wird diese Aufgabe durch ein Verfahren, welches dadurch gekennzeichnet ist, dass die Gase vor ihrem Einsatz zunächst mit schwerem Wasser ($D_2O$) beaufschlagt und anschliessend einem Trocknungsschritt unterworfen werden.

Gemäss einer bevorzugten Ausführungsform des Verfahrens werden die Hilfsgase auch vor der Beaufschlagung mit schwerem Wasser einem Trocknungsschritt unterzogen, da dann die Verunreinigung des schweren Wassers ($D_2O$) mit «leichtem» Wasser ($H_2O$) gering gehalten werden kann. Dieser vorgeschaltete Trocknungsschritt ist jedoch nicht zwingend vorgeschrieben und kann grundsätzlich auch unterbleiben.

Für die Trocknung eignen sich Verfahrensweisen, die allgemein üblich und dem Fachmann bekannt sind. Solche Methoden sind beispielsweise Trocknung durch Auskondensieren bzw. Ausfrieren, absorptive Trocknung, z.B. mittels $P_4O_{10}$, oder insbesondere adsorptive Trocknung, z.B. mittels Silikagel oder günstig mittels Molekularsieben, wie sie z.B. unter der Bezeichnung «Lindes Molekularsiebe» erhältlich sind. Auch der Einsatz handelsüblicher Trockenpatronen ist denkbar.

Insbesondere für den zweiten, nachgeschalteten Trocknungsvorgang empfehlen sich Trocknungsverfahren, bei denen das teure schwere Wasser sich, beispielsweise durch Desorption, zurückgewinnen und wieder in den Prozess zurückführen lässt.

Auch die Beaufschlagung der Hilfsgase mit schwerem Wasser kann in der bekannten und gebräuchlichen Weise durchgeführt werden. Beispielsweise lässt sich das $D_2O$ in Dampfform den Gasen zufügen oder in flüssiger Form einsprühen oder zerstäuben. Günstiger werden die Gase jedoch durch ein mit schwerem Wasser gefülltes Bad geleitet, vorzugsweise geperlt. Dabei hat es sich bewährt, möglichst kleine Gasblasengrössen, beispielsweise bis zu 0,1 bis 0,5 mm Durchmesser, und lange Verweilzeiten anzustreben, um eine Sättigung der Gase mit $D_2O$ zu ermöglichen. Gegebenenfalls kann auch, beispielsweise durch Beheizung des Bades, die Temperatur des schweren Wassers erhöht werden, um über den erhöhten Dampfdruck auch den Schwerwasseranteil in der Gasphase zu steigern.

Zweckmässig sollte das eingesetzte schwere Wasser ($D_2O$) einen möglichst geringen Anteil an «leichtem» Wasser ($H_2O$) aufweisen. Bewährt hat sich ein $D_2O$-Anteil von mindestens 90 Gew.-%, vorzugsweise 99 Gew.-%, obgleich grundsätzlich auch niedrigere $D_2O$-Anteile im Wasser geeignet sind.

Die jeweils vorhandene Gasphase kann im Verlauf des Beaufschlagungsschrittes bis zu einem bestimmten Sättigungsdampfdruck Wasser aufnehmen. Dieser Sättigungsdampfdruck setzt sich zusammen aus den Partialdrücken der vorhandenen Wassermolekülarten, also «leichtes» Wasser ($H_2O$), «halbschweres» Wasser (HDO) und «schweres» Wasser ($D_2O$). Da diese Partialdrücke direkt proportional den jeweiligen Molenbrüchen sind, kann ein Gas mit vernachlässigbar kleinem OH-Anteil erhalten werden, wenn ein möglichst geringer $H_2O$-Anteil einem möglichst grossen Überschuss an $D_2O$ gegenübersteht. Gemäss der bevorzugten Ausführungsform der Erfindung wird daher das zu behandelnde Gas bereits vor der Beaufschlagung mit schwerem Wasser einem sorgfältigen Trocknungsschritt unterzogen, um etwa vorhandenes «leichtes» Wasser möglichst vollständig abzutrennen. Das vorgetrocknete Gas wird dann, möglichst bis zur Erreichung des Sättigungsdampfdruckes, mit schwerem Wasser angereichert. Schliesslich wird in dem abschliessenden Trocknungsschritt der Wasseranteil weitestgehend wieder aus dem Hilfsgas entfernt, um etwaige Störungen durch $D_2O$ in den nachfolgenden Prozessen zu vermeiden. Das erhaltene Gas enthält dann nur noch Spuren von $D_2O$ und demgegenüber vernachlässigbar kleine Mengen von $H_2O$.

Das erfindungsgemässe Verfahren ermöglicht es damit, bei der Herstellung von Lichtwellenleitern, insbesondere nach dem IVPO- (Inside vapor phase oxidation) Verfahren, OVPO- (Outside vapor phase oxidation) Verfahren, oder VAD- (Vapor axial deposition) Verfahren, die störenden Auswirkungen des durch die Hilfsgase eingeschleppten «leichten» Wassers auszuschalten. Es kann darüberhinaus grundsätzlich auch bei anderen Verfahren angewendet werden, die zur Herstellung von Gläsern mit geringen Dämpfungswerten im Bereich der OH-Schwingungsbanden dienen.

Die nachstehenden Ausführungsbeispiele dienen der weiteren Erläuterung, nicht aber Beschränkung, der Erfindung.

*Beispiel 1*

Bei der Herstellung von Lichtwellenleitern als Oxidationsmittel vorgesehenes Sauerstoffgas wurde mittels Molekularsieb (3 Å = $3.10^{-1}$nm) auf einen Wasser ($H_2O$)-Gehalt von etwa 50 Gew.- ppm getrocknet. Anschliessend wurde es in eine mit ca. 500 ml Reinst-$D_2O$ ($D_2O$-Anteil 99,9 Gew.-%, Temperatur 25°C) gefüllte Gaswaschflasche eingeleitet und über eine Frittenplatte in Form feiner Gasbläschen durch die Flüssigkeit geperlt.

Das austretende, mit $D_2O$ beaufschlagte Sauerstoffgas wurde danach an mehreren, mittels flüssigem Stickstoff gekühlten Kühlfingern vorbeigeleitet, wobei der grösste Teil des $D_2O$ auskondensierte. Zur Entfernung des verbliebenen Schwerwasseranteils durchströmte der Gasstrom schliesslich noch einen mit Phosphorpentoxid und einen mit Molekularsieb (3 Å = $3.10^{-1}$ nm) beschickten Trockenturm.

Eine abschliessende infrarotspektroskopische Analyse des erhaltenen Sauerstoffgases zeigte nur noch die für $D_2O$ charakteristischen Absorptionsbanden bei 1180 $cm^{-1}$ und 2790 $cm^{-1}$, während sich die typischen $H_2O$-Banden bei 1595 $cm^{-1}$, und 3700 $cm^{-1}$ nicht mehr feststellen liessen.

Der Restgehalt des Sauerstoffs an $D_2O$ betrug noch etwa 30 Gew.-ppm und konnte mit Hilfe handelsüblicher Trockenpatronen auf den bei der Herstellung von Lichtwellenleitern geforderten Wert von weniger als 1 Gew.-ppm verringert werden.

*Beispiel 2*

Mittels Molekularsieb vorgetrocknetes Argon mit einem $H_2O$-Restgehalt von 50 Gew.-ppm wurde in einen mit Rückflusskühler versehenen Kolben eingeleitet, in dem ca. 250 ml $D_2O$ am Sieden gehalten wurden. Der Gasstrom perlte zunächst durch die siedende Flüssigkeit, sättigte sich dabei mit $D_2O$ und wurde dann analog Beispiel 1 verschiedenen Trocknungsschritten durch Ausfrieren, Behandeln mit Phosphorpentoxid, und Behandeln mit Molekularsieb unterworfen. Nach abschliessendem Durchströmen einer handelsüblichen Trockenpatrone besass der Argonstrom einen Restwassergehalt ($D_2O$) unter ca. 1 Gew.-% ppm; infrarotspektroskopisch war kein Wasser ($H_2O$) mehr nachweisbar.

Das in den Kühlfingern ausgefrorene bzw. im Molekularsieb zurückgehaltene schwere Wasser konnte durch Auftauen bzw. Regenerierung zurückgewonnen und erneut dem vorgelegten $D_2O$ zugeschlagen werden.

**Patentansprüche**

1. Verfahren zur Verringerung des Hydroxylanteils in Lichtwellenleitern, wobei die bei ihrer Herstellung eingesetzten oxidierenden oder inerten Gase vor ihrem Einsatz zunächst mit schwerem Wasser ($D_2O$) beaufschlagt und anschliessend einem Trocknungsschritt unterworfen werden.

2. Verfahren nach Anspruch 1, dadurch gekennzeichnet, dass die Gase auch vor der Beaufschlagung mit schwerem Wasser einem Trocknungsschritt unterworfen werden.

3. Verfahren nach den Ansprüchen 1 und 2, dadurch gekennzeichnet, dass schweres Wasser mit mindestens 99 Gew.-% $D_2O$-Anteil eingesetzt wird.

**Claims**

1. Process for decreasing the hydroxy content of optical waveguides, wherein, before use, the oxidising or inert gases used in their manufacture are first treated with heavy water ($D_2O$) and are then subjected to a drying step.

2. Process according to claim 1, characterised in that the gases are also subjected to a drying step prior to being treated with the heavy water.

3. Process according to claims 1 and 2, characterised in that heavy water having a $D_2O$ content of at least 99% by weight is used.

**Revendications**

1. Procédé pour diminuer la proportion des groupes hydroxyles dans les guides d'ondes lumineuses, selon lequel on traite par de l'eau lourde ($D_2O$), avant de les utiliser, des gaz oxydants ou inertes mis en jeu dans la fabrication des guides d'ondes, et on soumet ensuite ces gaz à une étape de séchage.

2. Procédé selon la revendication 1, caractérisé en ce qu'on soumet les gaz, également avant leur traitement par l'eau lourde, à une étape de séchage.

3. Procédé selon les revendications 1 et 2, caractérisé en ce qu'on utilise de l'eau lourde contenant une proportion de $D_2O$ ou moins égale à 99% en poids.